# FASCICULE DE BREVET EUROPEEN

(11) **EP 0 577 451 B1**
(45) Date de publication et mention de la délivrance du brevet: **11.12.1996**
(21) Numéro de dépôt: 93401502.5
(22) Date de dépôt: 11.06.1993
(51) Int. Cl.: F02B 25/14, F02M 69/08, F02M 69/10

(54) **Dispositif de contrôle de l'injection pneumatique d'un mélange carburé dans un moteur à combustion interne à deux temps et utilisation associée**
Vorrichtung zum Kontrollieren der pneumatischen Einspritzung eines Gemisches für eine Zweitaktbrennkraftmaschine und ihre Verwendung
Device for controlling the pneumatic injection of carburetted mixture for a two stroke internal combustion engine and its use

(30) Priorité: 02.07.1992 FR 9208300
(43) Date de publication de la demande: 05.01.1994
(73) Titulaire: INSTITUT FRANCAIS DU PETROLE, 92502 Rueil-Malmaison (FR)
(72) Inventeur: Duret, Pierre, F-78500 Sartrouville (FR); Venturi, Stéphane, F-94600 Choisy le Roi (FR)

(56) Documents cités:
- EP-A- 0 279 429
- EP-A- 0 406 078
- EP-A- 0 406 083
- EP-A- 0 458 670
- DE-A- 4 012 471
- FR-A- 2 662 214
- US-A- 4 579 093
- PATENT ABSTRACTS OF JAPAN vol. 11, no. 28 (M-557)(2475) 27 Janvier 1987 & JP-A-61 201 818

## Description

La présente invention concerne l'injection pneumatique d'un mélange carburé dans une chambre de combustion d'un moteur à combustion interne à deux temps.

Plus précisément, l'invention permet un contrôle du débit et de la pression de l'air sous pression utilisé pour pulvériser pneumatiquement le carburant à l'intérieur de la chambre de combustion.

Dans le cas particulier d'un moteur deux temps à injection pneumatique tel que divulgué par exemple par le brevet FR-2,575,523, qui peut être considéré comme l'état le plus proche de la technique, l'air sous pression utilisé pour pulvériser pneumatiquement le carburant peut provenir du carter-pompe et seule une faible proportion de cet air est utilisée pour l'injection pneumatique, la majeure partie de cet air participant au balayage du cylindre.

La régulation et le contrôle de la pression et du débit d'air sous pression nécessaire à l'injection pneumatique de carburant sont deux paramètres très importants qui peuvent contribuer à améliorer très sensiblement la combustion.

Selon l'invention, la qualité de la combustion sera notamment améliorée au plan des conditions de stratification des gaz dans la chambre de combustion, aux faibles régimes et faibles charges.

La présente invention permet d'adapter la géométrie du jet d'injection pneumatique de carburant, ainsi que sa répartition dans l'espace et dans le temps, ceci afin d'optimiser sa pénétration et son mélange avec les gaz déjà contenus dans la chambre de combustion du moteur.

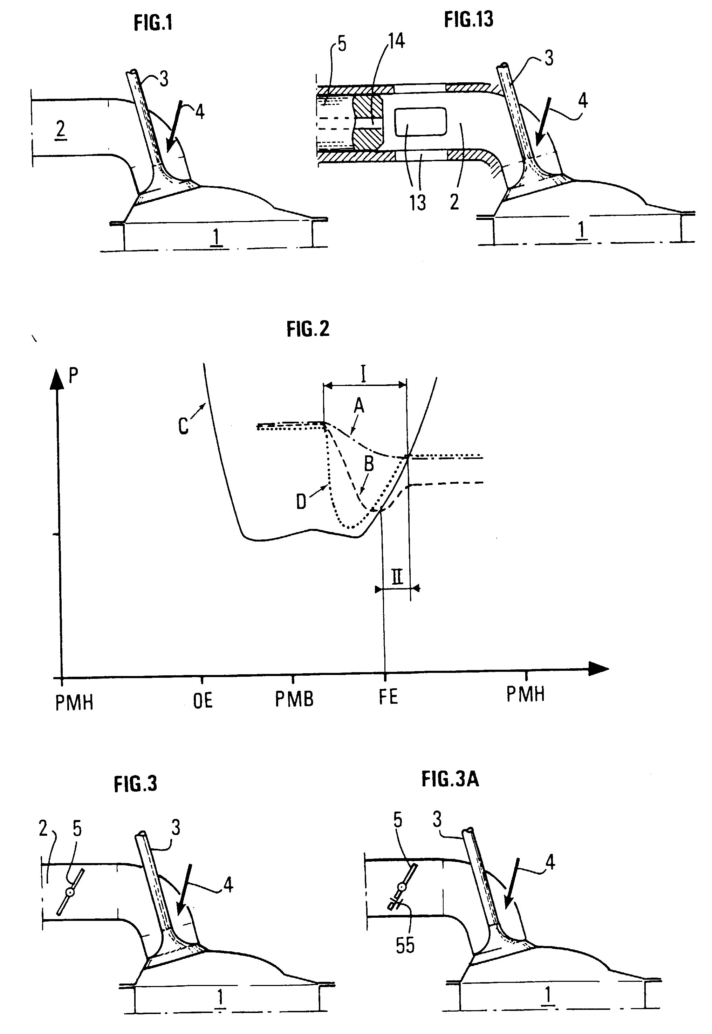

De façon connue, dans un moteur deux temps comme illustré par exemple par la figure 1, le système d'injection pneumatique peut comporter une canalisation débouchant dans la chambre de combustion, destinée à véhiculer un gaz généralement sous pression utilisé pour pulvériser le carburant. Celui-ci peut être amené dans la canalisation via un système de dosage qui débouche préférentiellement à proximité de l'extrémité de la canalisation ouverte sur la chambre de combustion. Un organe d'obturation intermittente telle une soupape, généralement situé à l'endroit où débouche la canalisation précitée, autorise dès qu'elle est ouverte, une pulvérisation du carburant dans la chambre de combustion grâce au gaz comprimé utilisé. Les brevets FR-2,575,521 et FR-2,575,522 montrent des injecteurs de ce type.

La source de pression utilisée dans ces exemples, peut provenir, comme illustré par le brevet français FR-2,575,523, totalement ou partiellement du carter-pompe du cylindre dans lequel a lieu l'injection ou encore d'un autre cylindre dont on utilise le décalage angulaire pour modifier la pression d'injection.

Diverses solutions ont été proposées afin d'améliorer de tels systèmes d'injection, notamment afin d'augmenter la pression du gaz comprimé. Ainsi, le brevet français FR-B1-2,592,436 préconise de placer un clapet anti-retour sur la canalisation d'amenée de gaz sous pression afin qu'une partie de celle-ci constitue une capacité de stockage de gaz sous pression.

Il est aussi connu par le document EP-A-406 083 de placer un clapet anti-retour dans une conduite reliant deux cylindres. Cependant un tel clapet ne peut être considéré comme un organe d'obturation destiné à contrôler l'air en fonction des conditions du moteur.

Ces divers concepts, s'ils permettent d'augmenter la pression d'injection, ne sont cependant pas modulables en fonction des différentes conditions de fonctionnement du moteur puisqu'ils sont essentiellement contrôlés par des différences de pression.

Ainsi, si le système d'injection pneumatique est réglé pour obtenir une pulvérisation optimale lors de charges élevées et de régimes élevés, des performances moindres risquent d'être réalisées à des régimes plus faibles. En effet, lorsque par exemple la loi d'ouverture du système contrôlé est optimisée pour obtenir la qualité de pulvérisation et la pénétration requise aux charges élevées et régimes élevés, si le même niveau de pression d'air comprimé est maintenu pour des régimes plus faibles, l'introduction du mélange comprimé air-carburant peut être trop rapide, entraînant par exemple trop rapidement le carburant vers la lumière d'échappement.

Cet exemple est illustré à la figure 2 qui montre des courbes de pression en fonction de l'angle vilebrequin. La courbe C représente l'évolution de la pression dans le cylindre tandis que les courbes A et B montrent respectivement la pression d'air comprimé (dans la canalisation d'alimentation) à haut régime et à faible régime.

La durée d'injection I se situe sensiblement autour de la fermeture échappement FE.

Sur cette figure, OE désigne l'ouverture échappement, PMH et PMB, respectivement le point mort haut et le point mort bas.

Cette figure montre un cas où la pression d'air comprimé chute trop vite aux faibles régimes moteur (courbe B), puisqu'elle rejoint très tôt la pression cylindre (courbe C), bien avant la fermeture de la soupape qui correspond à la fin de l'injection. Il en résulte une introduction trop brusque du mélange carburé qui peut être préjudiciable aux charges élevées à faible régime car une partie non négligeable du carburant peut alors atteindre l'échappement et s'échapper à l'atmosphère sans avoir brûlé. Ce phénomène peut aussi être préjudiciable aux faibles charges car le mélange carburé injecté de manière trop rapide et trop brutale se mélange trop vite avec les gaz brûlés résiduels enfermés dans le cylindre et ne reste plus inflammable au moment de l'allumage ou du démarrage attendu de la combustion.

D'autre part, comme le montre encore la figure 2, si l'introduction de mélange carburé se fait trop vite, avec une chute de pression d'air comprimé trop rapide, il peut en résulter un phénomène dit de "backflow" ou retour des gaz du cylindre jusqu'au niveau de l'injecteur pneumatique, la pression cylindre devenant supérieure à la pression d'air comprimé en amont de l'injecteur pneumatique. Ce backflow, qui existe dans la zone II de la figure 2, n'est pas favorable car il fait perdre de la compression cylindre et peut envoyer des gaz résiduels dans l'injecteur pneumatique, ce qui n'est pas souhaitable pour obtenir de bonnes conditions d'inflammabilité du mélange carburé au cycle suivant.

L'invention permet donc d'éviter notamment le problème lié à une introduction trop rapide et/ou trop brutale de mélange carburé dans la chambre de combustion.

En outre, elle permet de minimiser, voire d'éviter la réintroduction (ou backflow évoqué plus haut) de mélange carburé depuis le cylindre jusqu'au niveau de l'injecteur pneumatique.

Plus précisément, l'invention permet de se rapprocher de la courbe D définie en pointillés sur la figure 2, qui montre l'évolution de la pression à faible régime. Pendant l'injection I, cette pression n'est jamais inférieure à la pression-cylindre autrement dit aucun phénomène de "backflow" n'existe dans ce cas idéal.

Une pulvérisation constante et continue peut donc être réalisée.

Suivant l'invention, il est recherché d'avoir moins d'air introduit au début de l'ouverture de la soupape (ou du moyen de contrôle) et d'étaler cette introduction sur toute la plage d'ouverture de la soupape. Cela permet d'avoir une vitesse de l'air au niveau de la soupape plus lente et plus constante dans tout le temps d'ouverture. Le carburant est donc pulvérisé de manière plus lente et moins brutale dans le cylindre.

La pénétration du mélange carburé dans le cylindre est ralentie, ce qui permet dans des conditions de fonctionnement du moteur où beaucoup de gaz brûlés résiduels sont présents dans le cylindre (moteurs deux temps dans des conditions de faible charge, par exemple) d'éviter au maximum le mélange entre ces gaz brûlés résiduels et le mélange carburé injecté. Une stratification entre le mélange carburé et les gaz résiduels peut ainsi être obtenue, ce qui est très favorable à un bon déroulement de la combustion.

Pour atteindre ces objectifs, l'invention a pour objet un moteur à combustion interne à deux temps à carter-pompe associé à un cylindre comprenant un dispositif de contrôle de l'injection pneumatique d'un mélange carburé dans la chambre de combustion où le gaz sous pression nécessaire à l'injection pneumatique est issu du carter pompe du cylindre, une canalisation d'alimentation en gaz comprimé qui peut être mise en communication avec la chambre de combustion d'un cylindre par l'intermédiaire d'un organe d'obturation intermittente, et un dispositif de dosage de carburant débouchant dans ladite canalisation.

Selon l'invention, il comprend en outre un organe d'obturation sélective disposé dans ladite canalisation en amont dudit organe d'obturation intermittent et dudit dispositif d'injection de carburant, et destiné à contrôler tout l'air sous pression véhiculé dans ladite canalisation et utilisé pour l'injection pneumatique, en fonction de la charge et du régime dudit moteur, afin de réaliser une pulvérisation constante et continue dudit mélange pendant l'injection pneumatique.

Il s'agit donc, selon l'invention, d'introduire dans le conduit d'alimentation en gaz comprimé, en amont de l'organe de mise en communication avec la chambre de combustion et en amont du dispositif de dosage du carburant, un moyen de restriction du flux d'air comprimé afin de ralentir sa vitesse et éventuellement dans certains modes de réalisation, d'éviter que cette vitesse puisse s'inverser (pour éviter le fonctionnement en backflow).

Selon un mode de réalisation de l'invention, l'organe d'obturation intermittente peut être une soupape.

Sans sortir du cadre de l'invention, cet organe peut être un boisseau rotatif.

L'organe d'obturation sélective peut être une vanne papillon, ou encore un boisseau tournant.

Selon un mode particulier de réalisation de l'invention, l'organe d'obturation sélective peut être constitué d'au moins une butée associée à au moins une lame ressort, de type fibre de verre ou autre, sur un support, l'ensemble formant clapet anti-retour.

Selon un autre mode de réalisation de l'invention, l'organe d'obturation sélective peut être constitué d'un élément réalisant une restriction de la section de ladite canalisation, sur une longueur variable en fonction des conditions de fonctionnement du moteur.

Le dispositif selon l'invention peut en outre comporter un conduit de dérivation de ladite canalisation d'alimentation, ledit conduit, de diamètre inférieur à la canalisation, étant situé de part et d'autre de l'organe d'obturation sélective et permettant d'acheminer la quantité minimum d'air nécessaire à l'injection pneumatique sous une pression élevée.

Le conduit de dérivation peut être équipé d'un organe de restriction de son débit.

Préférentiellement, le dispositif d'injection de carburant peut déboucher dans la partie de ladite dérivation la plus proche dudit premier organe d'obturation.

Selon encore un mode de réalisation de l'invention, au moins un canal de transfert destiné à injecter de l'air de balayage issu du carter-pompe dans ledit cylindre peut être équipé d'un organe de restriction de débit, de sorte qu'une modulation entre le débit d'air injecté pour le balayage via ledit canal de transfert et le débit d'air pour l'injection pneumatique de carburant peut être réalisée.

D'autres caractéristiques et avantages de la présente invention apparaitront mieux à la lecture de la description qui va suivre, faite à titre illustratif et nullement limitatif en référence aux dessins annexés sur lesquels :
- les figures 3 et 3A montrent chacune par une coupe simplifiée un mode de réalisation du dispositif selon l'invention,
- la figure 4 est une coupe simplifiée d'un autre mode de réalisation du dispositif selon l'invention,
- la figure 5 est une coupe simplifiée d'un troisième mode de réalisation du dispositif selon l'invention,
- les figures 5A à 5D représentent des détails de réalisation de l'organe d'obturation sélective, selon la figure 5,
- les figures 6A et 6B montrent en coupe les positions extrêmes d'un organe d'obturation sélective selon l'invention,
- les figures 7A, 7B et 7C montrent par des coupes des modes de réalisation de l'invention comportant un conduit de dérivation autour de l'organe d'obturation sélective,
- la figure 8 est une vue en coupe longitudinale d'un moteur équipé d'un dispositif de contrôle de l'injection pneumatique selon l'invention, associé à un organe de vannage des conduits de transfert,
- la figure 9 est une vue en coupe d'un moteur semblable à celui de la figure 8 dans lequel le volume du carter-pompe est variable,
- la figure 10 est une vue en coupe longitudinale d'un moteur équipé d'un dispositif de contrôle de l'injection pneumatique selon l'invention, dans lequel la conduite d'alimentation forme une capacité de stockage de gaz sous pression,
- la figure 11 montre des courbes de la pression en fonction de l'angle vilebrequin, pour différents cas de figure,
- la figure 12 est une vue en coupe d'un moteur équipé d'un dispositif de contrôle de l'injection pneumatique selon l'invention, associé à une capacité de stockage de gaz sous pression,
- les figures 12A et 12B représentent en coupe des détails de réalisation du moteur selon la figure 12, et
- la figure 13 représente une vue en coupe d'un autre mode de réalisation de l'invention.

La figure 3 montre de façon schématique une chambre de combustion 1 dans laquelle débouche une canalisation 2 d'alimentation en gaz comprimé qui peut être mise en communication avec la chambre de combustion grâce à un organe d'obturation intermittente 3 telle une soupape. Un boisseau rotatif ou tout autre organe d'obturation intermittente, connu en soi, peut bien entendu être utilisé. Le mouvement de cet organe peut être contrôlé de façon connue par des éléments de commande classiques ou autres.

Un dispositif de dosage de carburant symbolisé ici par la flèche 4 permet d'introduire du carburant liquide dans la canalisation 2, de préférence à proximité de l'extrémité de la canalisation 2 débouchant dans la chambre de combustion 1.

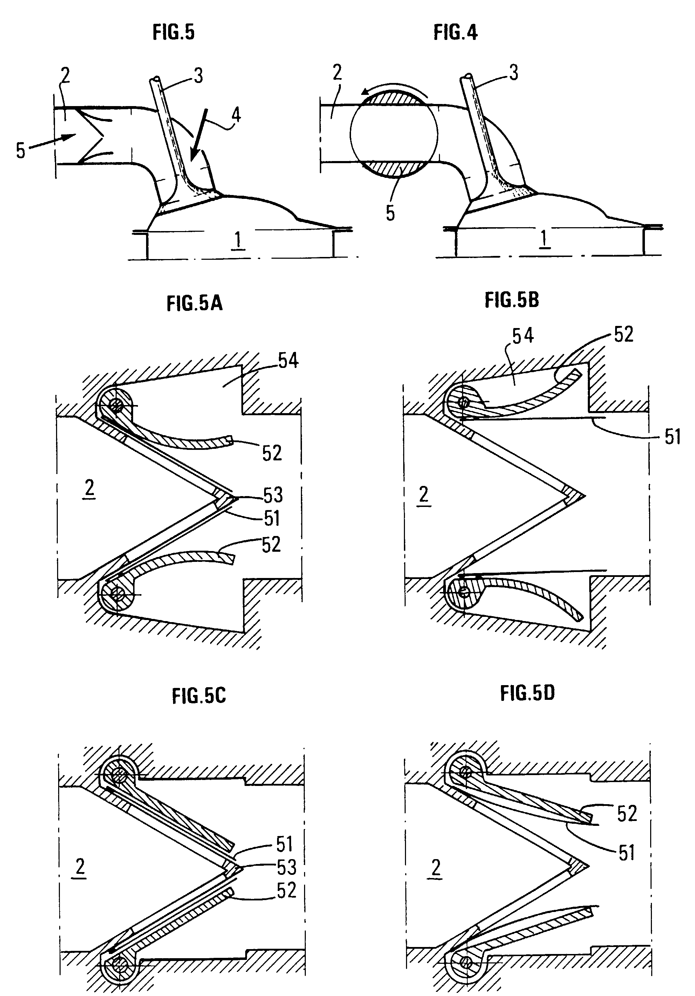

Selon l'invention, un organe d'obturation sélective 5 est placé dans la canalisation 2 en amont à la fois du dispositif 4 de dosage de carburant et de l'organe 3 d'obturation intermittente. Selon la figure 3, cet organe est une vanne-papillon, tandis que selon la figure 4 un élément tournant de type boisseau est choisi. D'autres solutions, tels que des diaphragmes permettant de réaliser la même fonction, peuvent bien entendu être utilisés sans sortir du cadre de la présente invention.

L'organe 5, commandé indépendamment de l'organe 3 par tout moyen connu en soi, permet d'obturer plus ou moins la section de passage de la canalisation 2 en fonction du moment du cycle, de la charge, du régime ... ou d'autres paramètres liés au fonctionnement du moteur.

Ainsi, si le papillon 5 obture largement la section de passage de la canalisation 2, lorsque la soupape 3 s'ouvre, la pression d'alimentation en gaz va diminuer dans la canalisation 2 en aval de l'organe 5 et rester relativement élevée en amont de cet organe 5. L'amont et l'aval sont ici définis relativement au sens d'écoulement principal des gaz, soit vers la chambre de combustion 1.

Du réglage évoqué ci-avant, il résulte un écoulement ralenti des gaz, prolongé dans le temps, afin d'éviter le "backflow" possible, tel que montré par exemple par la courbe D de la figure 2.

En outre, comme le montre la figure 3A une autre solution peut consister à placer un clapet anti-retour 55 sur l'organe d'obturation 5 lui-même, de type papillon. Ainsi, quand le papillon 5 est fermé, l'air comprimé ne passe qu'à travers le clapet 55 tandis que lorsque le papillon 5 s'ouvre, le clapet 55 n'a plus d'effet.

Cette association permet de combiner l'effet clapet anti-retour lorsque le papillon 5 est fermé avec un contrôle direct du débit par le papillon lui-même.

La figure 5 montre un autre mode de réalisation de l'invention selon lequel l'organe 5 d'obturation sélective est constitué de clapets anti-retour. Dans l'exemple représenté, des clapets à lames sont utilisés, les lames 51 (Figs 5A, 5B) agissent comme des ressorts et s'ouvrent en fonction de la variation de pression amont/aval des clapets. Elles entrainent donc une perte de charge qui, de plus, est variable suivant cette variation de pression. Cette solution présente en outre l'avantage d'éviter le retour de gaz de la chambre de combustion en amont de l'organe 4 d'obturation sélective.

Plus précisément, les lames-ressort 51 peuvent être métalliques ou constituées d'un composite à base de fibres de verre ou de fibres de carbone...

Dans l'exemple des figures 5A et 5B, l'ensemble des lames 51 et de leurs butées 52 est mobile en rotation autour d'un axe perpendiculaire à l'axe de la canalisation 2. Cet agencement permet de combiner l'effet clapet anti-retour en position fermée avec un effet contrôle direct du débit en fonction de l'ouverture. Additionnellement, un élément support 53 peut constituer une butée au centre de la canalisation 2 afin d'assurer une bonne étanchéité lorsque les lames 51 sont en position d'obturation maximale (Fig. 5A). Bien entendu, lorsqu'un important débit d'air doit passer dans la canalisation 2, une tringlerie ou tout autre moyen pourra faire tourner l'ensemble 51, 52 lame-butée jusque par exemple dans un logement 54 ménagé dans la canalisation, afin d'offrir une section de passage maximum au gaz sous pression.

Selon le mode de réalisation de l'invention des figures 5C et 5D, ce sont uniquement les butées 52 qui sont mobiles en rotation. L'ouverture reste donc contrôlée par l'ensemble lame-butée, mais son amplitude maximum est contrôlée uniquement par la position des butées, une extrémité des lames 51 étant encastrée par exemple sur le support 53 tandis que l'extrémité libre des lames 51, au centre de la canalisation 2 a un déplacement maximum limité par la position des butées 52.

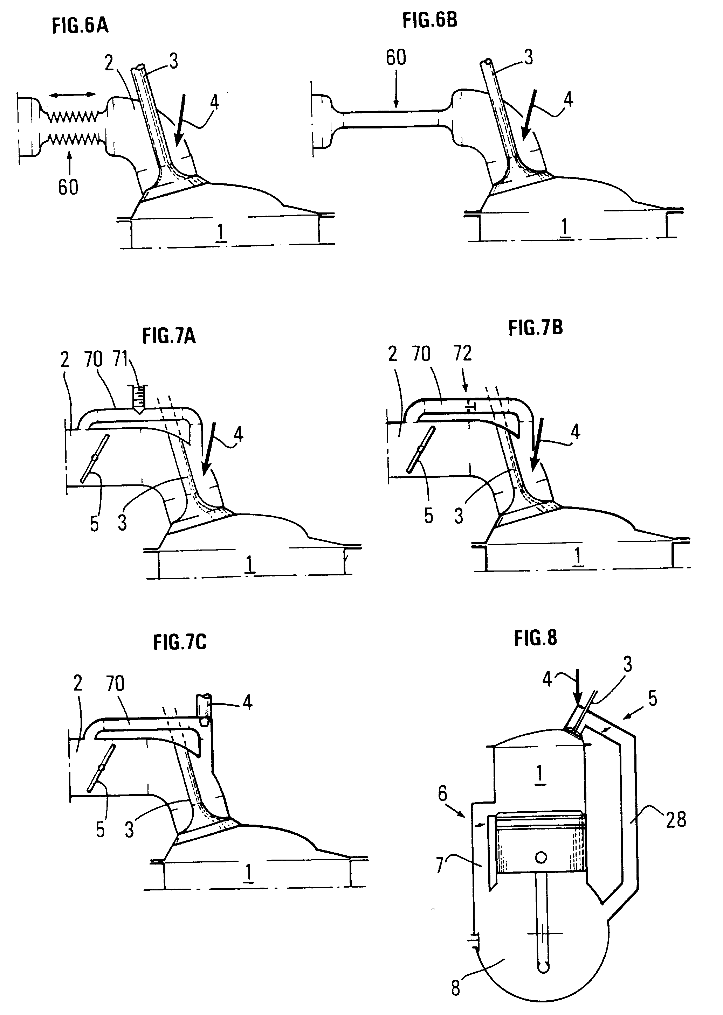

Dans l'exemple illustré par les figures 6A et 6B, la restriction et la perte de charge sont obtenues par un conduit 60 de section réduite par rapport à la canalisation 2. En outre, ce conduit 60 présente de préférence une longueur variable, la variation de longueur permettant ainsi de contrôler la perte de charge et de l'optimiser pour chaque condition de fonctionnement du moteur. La figure 6A montre le conduit 60 avec une longueur minimale d'où une perte de charge faible, tandis que la figure 6B illustre un conduit 60 en position d'allongement maximum.

Le conduit 60 peut être par exemple constitué d'un soufflet capable de s'allonger sous l'effet d'une variation de pression.

Dans un autre cas particulier de dispositif selon l'invention, tel que montré sur les figures 7A, 7B et 7C, il peut être intéressant d'avoir un petit conduit de dérivation 70 calibré au débit minimum correspondant à ce qui est requis par le moteur. Préférentiellement, le petit conduit 70 consiste en une dérivation autour de l'organe 5 d'obturation sélective. Ainsi, lorsque l'organe 5 obture complètement la canalisation 2, un contrôle précis de la quantité d'air minimum sous pression peut simultanément être réalisé, via la dérivation 70.

Il peut même être éventuellement ajouté une vis de réglage 71 de ce débit mini. Il est bien entendu qu'un clapet 72 tel que montré sur la figure 7B peut aussi être placé dans le conduit de dérivation 70.

Pour chaque mode de réalisation de l'invention comportant un conduit 70 de dérivation, le dispositif 4 de dosage de carburant pourra avantageusement être placé juste en aval dudit conduit 70.

Selon un cas particulier de l'invention, avec un dispositif tel que représenté sur la figure 7C, le gaz comprimé passant au travers du conduit 70 peut être astucieusement utilisé pour aider à une pré-atomisation du carburant en amont de la soupape 3. En effet, certains dispositifs 4 de dosage de carburant sont conçus de telle façon qu'ils peuvent utiliser le gaz comprimé pour le mélange avec le carburant dès la sortie de l'injecteur. C'est le cas par exemple des injecteurs dits à "manteau d'air". Ces injecteurs sont des moyens de dosage en continu ou de façon séquentielle du carburant, qui présentent la particularité de pouvoir être alimentés en air comprimé sur la périphérie du nez de l'injection de carburant.

Ainsi, selon la figure 7C, lorsque l'organe d'obturation sélective 5 (par exemple papillon) obture complètement la canalisation 2, l'air comprimé passe par le conduit 70 de dérivation et en même temps entraîne et pulvérise le carburant introduit par le moyen de dosage 4, cette préatomisation ayant donc lieu en amont de la soupape 3. Le mélange ainsi préatomisé passe ensuite au travers de l'ouverture (non référencée) entre la soupape 3 et son siège, l'accélération qui s'y produit permettant alors d'améliorer encore la qualité de la pulvérisation.

Il est bien entendu possible de combiner le dispositif suivant la figure 7C avec les moyens de contrôle du flux d'air comprimé à travers le conduit 70 de dérivation (vis de réglage de la figure 7A ou clapet de la figure 7B).

L'invention est appliquée à un moteur deux temps à carter-pompe, le carter-pompe est utilisé pour fournir la source d'air comprimé nécessaire à l'injection pneumatique. Tous les dispositifs décrits précédemment restent valables, mais ils peuvent additionnellement être combinés à d'autres moyens de contrôle de l'injection pneumatique.

La figure 8 montre ainsi un cas particulier où l'air comprimé destiné à l'injection pneumatique provient du carter-pompe 8 via une canalisation de liaison 28. Il peut alors être très avantageux de contrôler le débit des conduits de transferts 7, comme c'est le cas dans la demande de brevet française FR-2,649,157. La différence vis-à-vis de cet art antérieur réside en ce que le clapet entre le carter-pompe 8 et le volume d'air comprimé nécessaire à l'injection pneumatique (appelé capacité) peut ne pas être nécessaire de sorte que la canalisation 28 n'est pas utilisée comme capacité de stockage.

Dans le cas d'application de la figure 8, la pression d'air comprimé en amont de l'organe d'obturation sélective 5 dépend directement de la position de cet organe, mais elle dépend aussi de la position de l'organe de restriction 6 placé dans le (ou les) conduit(s) de transferts 7. En effet, pour une même charge du moteur en gaz frais, il devient possible par l'action combinée de l'organe d'obturation sélective S et de l'organe de restriction 6, de contrôler la répartition des flux d'air comprimé à travers les transferts 7 utilisé pour le balayage, et d'air comprimé à travers l'injecteur pneumatique 4 utilisé pour l'injection pneumatique. Ainsi, le débit et les conditions de pression de l'air comprimé alimentant l'injecteur pneumatique 4 pourront être optimisés conformément à l'invention par une judicieuse position des organes 5 et 6.

Par exemple, à faible charge, l'organe de restriction 6 sera préférentiellement partiellement fermé, ce qui aura pour effet d'augmenter le niveau de pression du carter-pompe 8, de retarder sa vidange dans la chambre de combustion 1, via les conduits de transfert 7, et de le maintenir au-dessus de la pression cylindre jusqu'à l'ouverture de l'injecteur pneumatique 4. L'organe d'obturation sélective 5 sera lui aussi partiellement fermé afin de contrôler le flux d'air comprimé suivant l'invention et d'obtenir une courbe de pression proche de celle de la courbe D de la figure 2.

La figure 11 explique mieux cet effet. On peut voir qu'avec l'organe de restriction 6 fermé, la pression dans le carter-pompe P2 est remontée en permanence vis-à-vis d'une pression P1 obtenue sans obturation du (ou des) conduit(s) de transfert 7. Ainsi, la pression P2 du carter-pompe, qui est aussi la pression régnant dans la canalisation 28 en amont de l'organe 5, reste supérieure à la pression cylindre C jusqu'à un moment avancé de l'injection pneumatique. La pression P2 peut donc être utilisée pour l'injection pneumatique et il convient donc de contrôler le flux d'air comprimé avec l'aide d'un dispositif suivant l'invention pour obtenir un jet de carburant bien pulvérisé avec une pénétration plus lente pour les faibles charges du moteur..

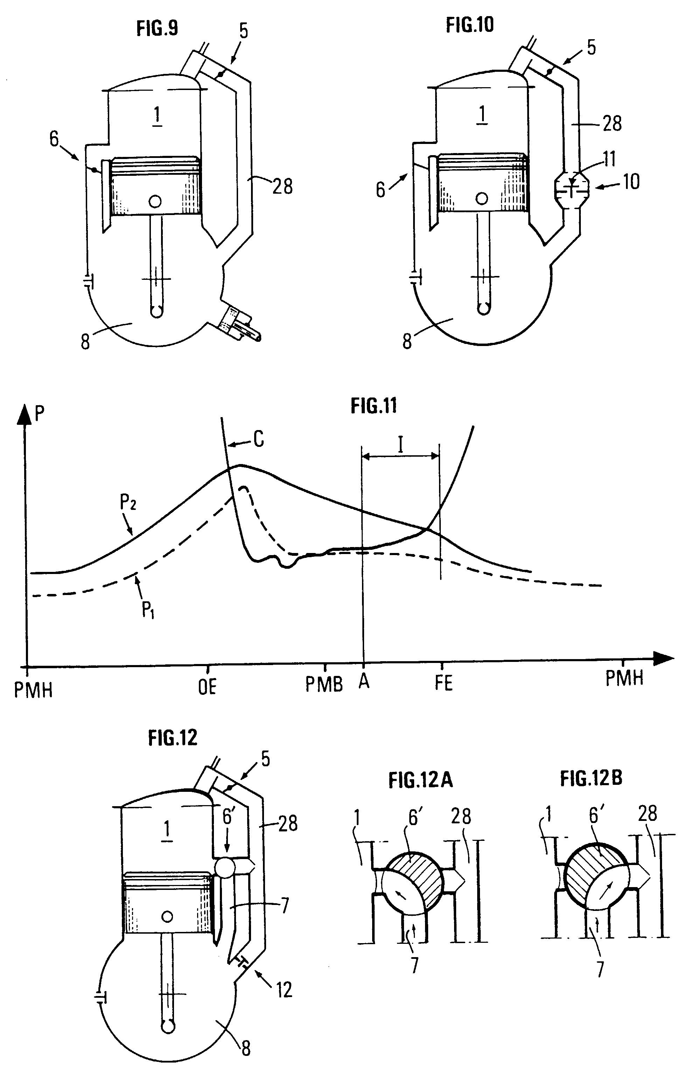

Dans une variante de ce dernier cas, représentée par la figure 9 par exemple, le volume du carter-pompe 8 pourra varier suivant les conditions de charge du moteur, afin de faire varier le niveau de compression du carter-pompe, ce qui peut être une autre façon de réaliser la fonction de l'organe. Le niveau de pression en amont de l'organe d'obturation sélective S suivant l'invention peut ainsi être contrôlé via le contrôle du volume du carter-pompe 8 et donc de son rapport de compression. A cet effet, un élément coulissant de type piston (non référencé) placé dans un volume communiquant avec le carter-pompe 8, peut être prévu.

Selon une autre utilisation possible du dispositif selon l'invention, illustrée par la figure 10, la variation du volume du carter-pompe peut aussi être combinée avec une variation du volume du conduit ou capacité d'air comprimé en amont de l'organe 5 d'obturation sélective. A cet effet, il est possible d'imaginer une pièce 10 de type piston placée dans la canalisation de liaison 28, mobile selon l'axe de ladite canalisation et divisant cette canalisation en deux parties, l'une communiquant directement avec le carter-pompe 8 et l'autre partie formant capacité de stockage de pression. Un clapet anti-retour 11 placé par exemple sur le piston 10, peut alors contribuer à former la capacité de stockage.

Les figures 12, 12A et 12B illustrent une autre façon d'obtenir une variation du volume du carter-pompe 8 grâce à un organe de restriction 6' placé à la jonction d'un conduit de transfert 7 et de la canalisation 28. Les figures 12, 12A et 12B montrent en effet un exemple où un élément tournant 6' est utilisé comme organe de restriction à la fois des conduits de transfert 7 et de la canalisation 28.

Lorsque par exemple, les conduits de transfert 7 ne sont pas obturés (ce qui correspond aux conditions de fortes charges du moteur et à la figure 12A), le volume du carter-pompe 8 est minimum et la canalisation formant capacité 28 n'est pas en communication avec le carter-pompe 8 autrement que par un clapet anti-retour 12 traditionnellement placé sur la canalisation 28. Ainsi, un carter-pompe 8 de volume minimum permettra une compression maximum d'air comprimé stocké dans la capacité 28, ce qui sera utile pour injecter pneumatiquement de fortes quantités de carburant (à fortes charges).

Lorsque, à contrario la charge diminue, l'organe de restriction 6 tourne de façon à obturer partiellement les conduits de transfert 7 tout en mettant en communication directe le conduit de transfert 7 avec la capacité 28. La figure 12B illustre ce mode de fonctionnement. Le clapet 12 ne sert alors plus à rien et la capacité 28 fait maintenant partie du volume du carter-pompe 8 via le conduit de transfert 7. Le volume du carter-pompe 8 est de ce fait significativement augmenté.

Cet arrangement permet de diminuer le niveau de pression du flux d'air comprimé alimentant l'injecteur pneumatique en amont de l'organe S d'obturation sélective.

L'élément anti-retour 12 peut être, comme déjà énoncé un clapet anti-retour connu en soi. Il peut aussi être constitué d'un ensemble tel que représenté sur les figures 5A et 5B, ensemble capable de combiner une position fermée (Fig. 5A) où les clapets ont une fonction anti-retour, avec une position ouverte (Fig. 5B) où les clapets ne contrôlent plus l'ouverture de la canalisation 28.

Enfin, la figure 13 illustre un mode de réalisation de l'invention selon lequel l'organe d'obturation sélective 5 présente la forme d'un piston coulissant dans la canalisation 2 et pouvant obturer ou non une ou plusieurs lumières 13 de la canalisation 2. Ainsi, l'air sous pression nécessaire à l'injection pneumatique peut être introduit par les lumières 13 dans la canalisation 2, lorsque l'organe d'obturation S se trouve dans la position représentée sur la figure 13.

Un canal longitudinal 14 est en outre prévu dans le piston 13; ce canal permet notamment, lorsque le piston 5 obture les lumières 13, de faire passer un petit débit d'air comprimé.

Une tringlerie ou tout autre moyen connu en soi permettra de déplacer le piston 5, en fonction des conditions de fonctionnement du moteur.

A faibles charges, le piston recouvrira préférentiellement les lumières 13 d'admission principale d'air sous pression de sorte que seul un petit débit d'air sera admis. Dans cette position, le volume compris entre le piston 5 et la soupape 3 est donc réduit, ce qui améliore considérablement l'injection pneumatique. Ceci est un avantage particulièrement intéressant de ce mode de réalisation de l'invention.

Le dispositif suivant l'invention, tel que décrit ci-dessus, est préférentiellement utilisé sur un moteur deux temps fonctionnant en auto-allumage, c'est-à-dire ne nécessitant pas d'allumage commandé de la charge dans les conditions de faibles charges.

En effet, selon l'invention, les débits à travers l'injecteur pneumatique et les conduits de transferts sont régulés de manière à obtenir ce fonctionnement en auto-allumage.

## Revendications

1. Moteur à combustion interne à deux temps à carter-pompe associé à un cylindre comprenant un dispositif de contrôle de l'injection pneumatique d'un mélange carburé dans la chambre de combustion (1) où le gaz sous pression nécessaire à l'injection pneumatique est issu du carter-pompe (8) du cylindre, une canalisation (2) d'alimentation en gaz comprimé qui peut être mise en communication avec la chambre de combustion (1) du cylindre par l'intermédiaire d'un organe d'obturation intermittente (3), et un dispositif (4) de dosage de carburant débouchant dans ladite canalisation, caractérisé en ce qu'il comprend en outre un organe (5) d'obturation sélective disposé dans ladite canalisation (2) en amont dudit organe d'obturation intermittente et dudit dispositif d'injection de carburant, et destiné à contrôler tout l'air sous pression véhiculé dans ladite canalisation et utilisé pour l'injection pneumatique, en fonction de la charge et du régime dudit moteur, afin de réaliser une pulvérisation constante et continue dudit mélange pendant l'injection pneumatique.

2. Moteur selon la revendication 1, caractérisé en ce que ledit organe d'obturation intermittente (3) est une soupape.

3. Moteur selon la revendication 1, caractérisé en ce que ledit organe d'obturation intermittente (3) est un boisseau rotatif.

4. Moteur selon l'une quelconque des revendications précédentes, caractérisé en ce que ledit organe d'obturation sélective (5) est une vanne type papillon.

5. Moteur selon l'une quelconque des revendications 1 à 3, caractérisé en ce que ledit organe d'obturation sélective (5) est un boisseau tournant.

6. Moteur selon l'une quelconque des revendications 1 à 3, caractérisé en ce que l'organe d'obturation sélective (5) est un piston coulissant dans la canalisation (2) et pouvant obturer au moins une lumière (13) de la canalisation 2 destinée à l'admission d'air comprimé, ledit piston étant percé d'une canalisation (14).

7. Moteur selon l'un quelconque des revendications 1 à 3, caractérisé en ce que ledit organe d'obturation sélective est constitué d'au moins une butée (52) associée à au moins une lame ressort (51), l'ensemble formant clapet anti-retour.

8. Moteur selon l'une quelconque des revendications 1 à 3, caractérisé en ce que ledit organe d'obturation sélective est constitué d'un élément (60) réalisant une restriction de la section de ladite canalisation, sur une longueur variable en fonction des conditions de fonctionnement du moteur.

9. Moteur selon l'une quelconque des revendications 1 à 5, caractérisé en ce qu'il comporte en outre un conduit (70) de dérivation de ladite canalisation d'alimentation (2), ledit conduit, de diamètre inférieur à la canalisation (2), étant situé de part et d'autre dudit organe d'obturation sélective (5) et permettant d'acheminer la quantité minimum d'air nécessaire à l'injection pneumatique sous une pression élevée.

10. Moteur selon la revendication 9, caractérisé en ce que ledit conduit (70) de dérivation est équipé d'un organe (71 ; 72) de restriction de son débit.

11. Moteur selon l'une des revendications 9 ou 10, caractérisé en ce que ledit dispositif d'injection de carburant (4) débouche dans la partie de ladite dérivation (70) la plus proche dudit organe d'obturation intermittente (3).

12. Moteur selon l'une quelconque des revendications 1 à 7, caractérisé en ce qu'au moins un canal de transfert (7) destiné à injecter de l'air de balayage issu du carter-pompe (8) dans ledit cylindre est équipé d'un organe (6, 6') de restriction de débit, de sorte qu'une modulation entre le débit d'air injecté pour le balayage via ledit canal de transfert (7) et le débit d'air pour l'injection pneumatique de carburant peut être réalisée.

13. Moteur selon l'une quelconque des revendications précédentes, caractérisé en ce qu'il comporte en outre un élément (6' ; 10, 11) permettant de faire varier le volume dudit carter-pompe (8).

14. Utilisation du moteur selon l'une des revendications précédentes en combinaison avec des conduits de transferts obturables en fonction des conditions de fonctionnement du moteur.

15. Utilisation du moteur selon l'une des revendications 1 à 13 dans un fonctionnement en auto-allumage.

## Patentansprüche

1. Zweitakt-Brennkraftmaschine mit einem Zylinder zugeordneter Gehäuse-Pumpe umfassend: eine Regelvorrichtung für die Lufteinspritzung eines Kraftstoffgemisches in die Verbrennungskammer (1), wo das für die Lufteinspritzung notwendige Gas unter Druck aus der Gehäuse-Pumpe (8) des Zylinders stammt; einen Speisekanal (2) für Druckgas, der mit der Brennkammer (1) des Zylinders über ein intermittierendes Schließorgan (3) in Verbindung gesetzt werden kann; und eine Einrichtung (4) zur Dosierung des Kraftstoffs, die in diesen Kanal mündet, dadurch gekennzeichnet, daß sie im übrigen ein Organ (5) zum selektiven Verschließen umfaßt, das in diesem Kanal (2) in Strömungsrichtung vor dem Organ zum intermittierenden Schließen und der Vorrichtung zur Kraftstoffeinspritzung angeordnet und dazu bestimmt ist, die gesamte Luft unter Druck, die in diesem Kanal (2) befördert und für die Lufteinspritzung als Funktion der Last und der Drehzahl der Brennkraftmaschine verwendet wird, zu regeln, um eine konstante und kontinuierliche Zerstäubung dieses Gemisches während der Lufteinspritzung zu realisieren.

2. Brennkraftmaschine nach Anspruch 1, dadurch gekennzeichnet, daß dieses Organ zum intermittierenden Schließen (3) ein Ventil ist.

3. Brennkraftmaschine nach Anspruch 1, dadurch gekennzeichnet, daß das Organ zum intermittierenden Schließen (3) ein Drehküken ist.

4. Brennkraftmaschine nach einem der vorhergehenden Ansprüche, dadurch gekennzeichnet, daß dieses Organ zum selektiven Schließen (5) ein Ventil vom Typ Drosselklappe ist.

5. Brennkraftmaschine nach einem der Ansprüche 1 bis 3, dadurch gekennzeichnet, daß dieses Organ zum selektiven Schließen (5) ein sich drehendes Küken ist.

6. Brennkraftmaschine nach einem der Ansprüche 1 bis 3, dadurch gekennzeichnet, daß das Organ zum selektiven Schließen (5) ein in diesem Kanal (2) gleitender Kolben ist, der wenigstens einen Schlitz (13) des für den Einlaß von Druckluft bestimmten Kanals (2) schließen kann, wobei der Kolben von einem Kanal (14) durchbohrt ist.

7. Brennkraftmaschine nach einem der Ansprüche 1 bis 3, dadurch gekennzeichnet, daß dieses Organ zum selektiven Schließen gebildet wird durch wenigstens einen Anschlag (52), der wenigstens einer Blattfeder (51) zugeordnet ist, wobei die Gesamtanordnung ein Rückschlagventil bildet.

8. Brennkraftmaschine nach einem der Ansprüche 1 bis 3, dadurch gekennzeichnet, daß dieses Organ zum selektiven Schließen gebildet wird durch ein Element (60), das für eine Drosselung des Querschnitts dieses Kanals über eine variable Länge als Funktion der Betriebsbedingungen der Brennkraftmaschine sorgt.

9. Brennkraftmaschine nach einem der Ansprüche 1 bis 5, dadurch gekennzeichnet, daß sie im übrigen eine Abzweigungsleitung (70) für diesen Speisekanal (2) umfaßt, wobei diese Leitung, von einem Durchmesser kleiner als der des Kanals (2) zu beiden Seiten dieses Organs zum selektiven Schließen (5) angeordnet ist und es ermöglicht, die für die Lufteinspritzung notwendige Minimalmenge unter einem erhöhten Druck heranzuführen.

10. Brennkraftmaschine nach Anspruch 9, dadurch gekennzeichnet, daß diese Abzweigungsleitung (70) ausgestattet ist mit einem Organ (71; 72) zur Drosselung ihres Durchsatzes.

11. Brennkraftmaschine nach einem der Ansprüche 9 oder 10, dadurch gekennzeichnet, daß diese Kraftstoffeinspritzvorrichtung (4) in dem Teil dieser Umgehungsleitung (70) mündet, der diesem Organ zum intermittierenden Schließen (3) am weitesten benachbart ist.

12. Brennkraftmaschine nach einem der Ansprüche 1 bis 7, dadurch gekennzeichnet, daß wenigstens ein sogenannter Transfertkanal (7), der dazu bestimmt ist, aus der Gehäuse-Pumpe (8) stammende Spülluft in diesen Zylinder einzuspritzen, mit einem Durchsatzdrosselorgan (6, 6') derart ausgestattet ist, daß eine Modulation zwischen dem Durchsatz der für das Spülen über diesen sogenannten Transfertkanal (7) eingeblasenen Luft und dem Durchsatz der Luft für die Lufteinspritzung von Kraftstoff realisiert werden kann.

13. Brennkraftmaschine nach einem der vorhergehenden Ansprüche, dadurch gekennzeichnet, daß sie im übrigen ein Element (6; 10, 11) umfaßt, das es ermöglicht, das Volumen dieser Gehäuse-Pumpe (8) variieren zu lassen.

14. Verwendung der Brennkraftmaschine nach einem der vorhergehenden Ansprüche, in Kombination mit sogenannten Überführungsleitungen, die als Funktion der Betriebsbedingungen der Brennkraftmaschine verschließbar sind.

15. Verwendung der Brennkraftmaschine nach einem der Ansprüche 1 bis 13 bei einer Betriebsweise mit Selbstzündung.

## Claims

1. Two-stroke internal combustion engine with a crankcase and co-operating cylinder having a device for controlling the pneumatic injection of a carburetted mixture into a combustion chamber (1), where the compressed gas required for the pneumatic injection is taken from the crankcase (8) of the cylinder, a supply passage (2) for compressed gas, which can be placed in communication with the combustion chamber (1) of the cylinder by means of an intermittent closing member (3), and a fuel metering device (4) opening into the said passage, characterised in that it also has a selective closing member (5) arranged in the said passage (2) upstream of the said intermittent closing member and the said fuel injection device for the purpose of controlling, to suit the engine load and speed, all the compressed air fed into the said passage used for the pneumatic injection, in order to produce a constant and continuous spray of the said mixture during the pneumatic injection.

2. Engine as claimed in claim 1, characterised in that the said intermittent closing member (30 is a valve.

3. Engine as claimed in claim 1, characterised in that the said intermittent closing member (5) is a rotary valve.

4. Engine as claimed in any one of the preceding claims, characterised in that the said selective closing member (5) is a valve of the butterfly type.

5. Engine as claimed in any one of claims 1 to 3, characterised in that the said selective closing member (5) is a rotary valve.

6. Engine as claimed in any one of claims 1 to 3, characterised in that the selective closing member (5) is a piston sliding in the passage (2) and capable of closing off at least one port (13) of the passage (2) used for admitting compressed air, the said piston having a passage (14) bored therethrough.

7. Engine as claimed in any one of claims 1 to 3, characterised in that the said selective closing member consists of at least one stop (52) co-operating with at least one leaf spring (51), the assembly forming a non-return valve.

8. Engine as claimed in any one of claims 1 to 3, characterised in that the said selective closing member is an element (60) producing a restriction in the section of the said passage over a length that can be varied to suit the operating conditions of the engine.

9. Engine as claimed in any one of claims 1 to 5, characterised in that it also has a line (70) bypassing the said supply passage (2), the said line, whose diameter is smaller than that of the passage (2), being located on either side of the selective closing member (5) and capable of feeding the minimum quantity of air needed for the pneumatic injection at a high pressure.

10. Engine as claimed in claim 9, characterised in that the said bypass line (70) is fitted with a member (71; 72) to restrict the flow rate therein.

11. Engine as claimed in one of claims 9 or 10, characterised in that the said fuel injection device (4) opens into the portion of the said bypass (70) closest to the said intermittent closing member (3).

12. Engine as claimed in any one of claims 1 to 7, characterised in that at least one transfer passage (7) used to inject the scavenging air from the crankcase (8) into the said cylinder is fitted with a flow restriction member (6, 6') such that an adjustment can be made between the flow rate of air injected for scavenging via the said transfer passage (7) and the flow rate of the air used for the pneumatic injection of the fuel.

13. Engine as claimed in any one of the preceding claims, characterised in that it also has an element (6'; 10, 11) to allow the volume of the said crankcase (8) to be varied.

14. Use of the engine as claimed in any one of the preceding claims in combination with transfer passages that can be closed to suit the operating conditions of the engine.

15. Use of the engine as claimed in any one of claims 1 to 13 under conditions of self-igniting operation.
